Europäisches Patentamt

European Patent Office

Office européen des brevets

(19)

(11)   EP 1 484 742 A2

(12)       **EUROPEAN PATENT APPLICATION**

(43) Date of publication:
    **08.12.2004   Bulletin 2004/50**

(51) Int Cl.$^7$: **G09G 5/02**, H04N 9/64

(21) Application number: **04102019.9**

(22) Date of filing: **10.05.2004**

| | |
|---|---|
| (84) Designated Contracting States:<br>**AT BE BG CH CY CZ DE DK EE ES FI FR GB GR<br>HU IE IT LI LU MC NL PL PT RO SE SI SK TR**<br>Designated Extension States:<br>**AL HR LT LV MK** | (72) Inventors:<br>• **Lee, Sang-jin**<br>  **Seoul (KR)**<br>• **Kim, Moon-cheol**<br>  **Giheung-eup, Yongin-si Gyeonggi-do (KR)** |
| (30) Priority:  **05.06.2003  KR 2003036362** | (74) Representative: **Read, Matthew Charles et al**<br>**Venner Shipley LLP** |
| (71) Applicant: **Samsung Electronics Co., Ltd.**<br>**Suwon-si, Gyeonggi-Do 442-742 (KR)** | **20 Little Britain**<br>**London EC1A 7DH (GB)** |

(54)     **Color signal processing for a multi-primary display**

(57)     A color signal processing apparatus for calculating a control vector for driving a multi-primary display (MPD) corresponding to an input color signal. The color signal processing apparatus comprises an XYZ color signal conversion unit (110) for converting an input color signal into a device-independent color signal and determining a color gamut of the MPD based on a Forward Model. The color gamut is divided into a plurality of pyramids, and intermediate values based on the plurality of pyramids are calculated by parallel calculating means $(Q_1-Q_N)$. A set of intermediate values based on predetermined physical restrictions are selected by a restriction control checking unit (130). The control vector is calculated, based on the restricted values, by a control vector arrangement unit (150). This arrangement does not require a look-up table for determining the color gamut and thereby avoids quantization errors.

FIG. 5

**Description**

The present invention relates to a method for driving a multi-primary display calculating a control vector, based on an input three-primary color signal, for controlling the four or more primary color light sources of the multi-primary display and a color signal processing apparatus for calculating the control vector.

Color-reproducing devices such as monitors, scanners, printers, and so on, employ different color spaces from one another, according to their respective utilization areas. A color space is a scheme for defining a color in terms of relationships between a first color and other colors. These include RGB color space, used in color CRT monitors, computer graphic devices and so on, CMY color space, for use in color image printing devices and the like and the HSI color space for devices that define colours in terms of their hue, saturation, and intensity. There are also CIE color spaces, which are used to define device-independent colors so that they can be exactly reproduced using any device. The CIE color spaces include CIE-XYZ color space, CIE L*a*b color space, CIE L*u*v color space and so on.

In general, color-reproducing devices use three basic primary colors. For example, in RGB color space, red, green and blue are used as the primary colors that are "mixed" in order to produce other colors. In CMY color space, the three primary colors are cyan, magenta, and yellow.

Recently, there have been attempts to provide color gamuts that extend beyond the range of color that can be achieved with three primary colours. These developments are based on the use of four or more primary colors in color-reproducing devices such as multi-primary displays (MDPs). However, in order to reproduce a standard color signal based on three primary colors in an MPD, a color signal processing device for calculating a control vector is required. The control vector is used as a driving signal for the MPD in accordance with the input standard color signal.

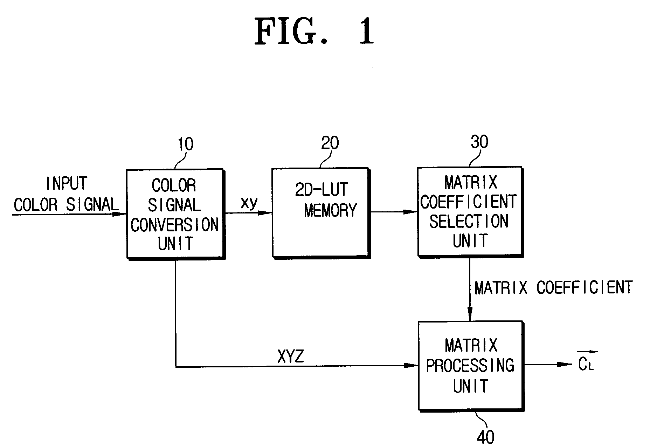

Figure 1 is a block diagram showing an example of a conventional color signal processing apparatus. The conventional color signal processing apparatus includes a color signal conversion unit 10, a 2D-LUT (Look Up Table) memory 20, a matrix coefficient selection unit 30 and a matrix processing unit 40.

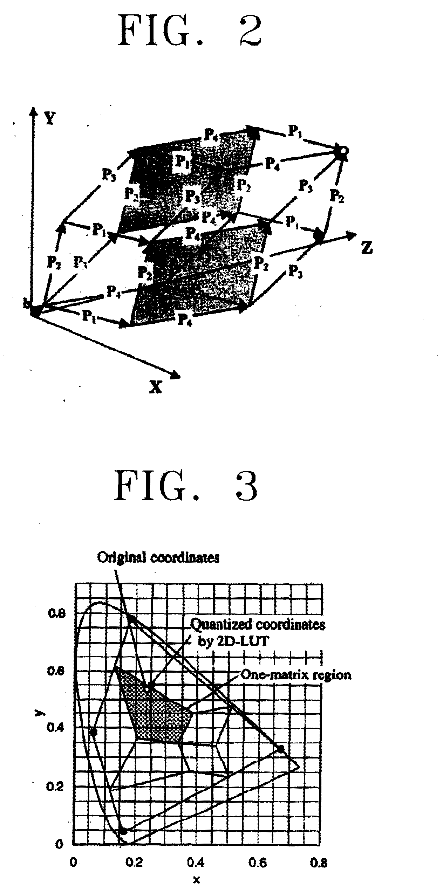

The color signal conversion unit 10 converts an input color signal into an xy color signal in a CIE-XYZ color space. The xy color signal is input to the 2D-LUT memory 20. With reference to Figure 2, 2D-LUT data corresponding to the range of the color gamut of the input color signal is stored in the 2D-LUT memory 20 and transferred to the matrix coefficient selection unit 30, where a matrix coefficient, corresponding to the color gamut, is calculated. The matrix coefficient is transferred to the matrix processing unit 40, which performs a vector processing procedure, shown in Figure 3. The matrix processing unit 40 outputs a control vector $C_L$, which corresponds to the input color signal.

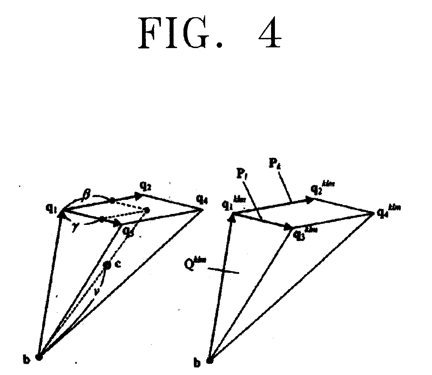

Figure 4 depicts a polyhedron corresponding to a color gamut of an MPD. Each area shown in Figure 2 corresponds to a boundary area of the color gamut, capable of belonging to a plane of a polyhedron, excluding a black point b. That is, the plane defined by four vertices forms part of a pyramid, where the black point b provides a fifth vertex.

The conventional method requires calculation of the 2D-LUT data in advance, according to the characteristics of a particular system, in order to allow a corresponding matrix coefficient selection to be made. However, this may result in quantization errors in the 2D-LUT data. In addition, a 2D-LUT memory is required for storage of the 2D-LUT data. The 2D-LUT memory must have sufficient capacity to ensure that a matrix coefficient can be selected without errors at boundaries of a corresponding area.

According to a first aspect of the invention, a method of driving a multi-primary display comprises calculating a control vector, based on an input three-primary color signal, for controlling four or more primary color light sources the multi-primary display, characterised in that said calculation corresponds to dividing a color space into a plurality of pyramids, each pyramid having black as one vertex, calculating candidate control values for a plurality of said pyramids, selecting a set of control values according to predetermined criteria and deriving the control vector from the selected control values.

In this manner, a MPD control vector that corresponds to an input color signal can be calculated with precision and efficiency. The invention permits the reproduction of a standard colour signal on a MDP using four or more primary colors without use of a LUT, thereby avoiding associated quantization errors.

The method may also comprise converting the input color signal to a color signal based on a second standard, wherein said second standard is device-independent, in order to define said color space and/or correcting the calculated control vector in accordance with characteristics of the MPD.

According to a second aspect of the invention, a color signal processing apparatus for calculating a control vector for driving a multi-primary display comprises calculating means configured to calculate the control vector based on a three-primary colour input color signal, for controlling four or more primary color light sources of the multi-primary display, characterised in that said calculation means are configured to divide a color space into a plurality of pyramids, each pyramid having black as one vertex and comprises control value calculating means configured to calculate candidate control values for a plurality of said pyramids, selection means arranged to select a set of control values according to predetermined criteria and control vector calculating means configured to derive the control vector from the selected control values.

This aspect also provides a display apparatus comprising such a color signal processing apparatus and a multi-primary display.

An embodiment of the invention will now be described, by way of example, with reference to the accompanying drawings, in which:

Figure 1 is a block diagram of a conventional color signal processing apparatus;
Figures 2, 3 and 4 are explanatory diagrams relating to operation of the conventional color signal processing apparatus of Figure 1;
Figure 5 is a block diagram of a color signal processing apparatus according to an embodiment of the present invention;
Figure 6 is a flow chart of a procedure for calculating a control vector that is performed by the color signal processing apparatus of Figure 5;
Figures 7A to 7C are explanatory diagrams relating to the control vector calculation; and
Figures 8 and 9 are diagrams relating to a graphical theory on which the control vector calculation is based.

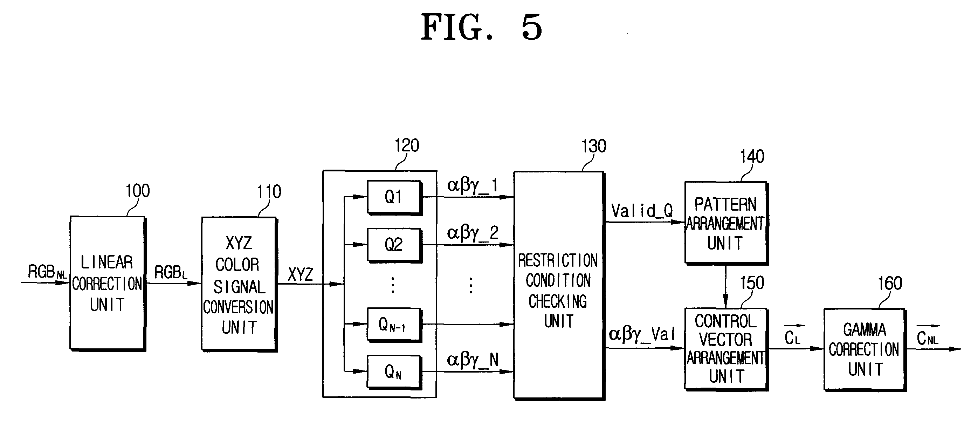

Referring to Figure 5, a color signal conversion apparatus according to the present invention includes a linear correction unit 100, an XYZ color signal conversion unit 110, a parallel processing unit 120, a restriction condition checking unit 130, a pattern arrangement unit 140, a control vector arrangement unit 150 and a gamma correction unit 160.

The linear correction unit 100 converts an input standard non-linear RGB color signal into a linear RGB color signal. The standard non-linear RGB color signal is a color signal which complies with a given standard specification, for example, the International Electro-Technical Commission's (IEC) RGB standard, the HDTV standard ITU-R.BT.709 and so on.

The XYZ color signal conversion unit 110 converts the linear RGB color signal, output by the linear correction unit 100, into a XYZ color signal in the CIE-XYZ color space.

The parallel processing unit 120 comprises N matrix processors $Q_1$, $Q_2$,... $Q_N$. The matrix processors $Q_1$ to $Q_N$ simultaneously calculate intermediate values $\alpha\beta\gamma\_1$, $\alpha\beta\gamma\_2$, ... $\alpha\beta\gamma\_N$, for use in calculation of a control vector based on the input RGB color signal.

The restriction condition checking unit 130 checks whether physical restriction conditions are met with respect to the intermediate values $\alpha\beta\gamma\_1$ to $\alpha\beta\gamma\_N$, calculated in the parallel processing unit 120. The restriction condition checking unit 130 outputs values, based on the intermediate values $\alpha\beta\gamma\_1$ to $\alpha\beta\gamma\_N$, that satisfy the restriction conditions. These output values are a $\alpha\beta\gamma\_Val$ signal and a Valid_Q signal. The Valid_Q signal is an index signal for identifying a given matrix processor $Q_1$ to $Q_N$.

The pattern arrangement unit 140 transfers channel information to the control vector arrangement unit 150. The channel information specifies the channel of the control vectors to which the $\alpha\beta\gamma\_Val$ signal corresponds and is based on the Valid_Q signal outputted from the restriction condition checking unit 130.

The control vector arrangement unit 150 receives the channel information, assigns each $\alpha\beta\gamma\_Val$ signal to a corresponding channel and calculates the control vector $C_L$.

The gamma correction unit 160 performs a reverse direction non-linear correction, that is, a gamma correction for offseting the non-linear electro-optical characteristics of an MPD with which the color signal apparatus is associated, and outputs a final control vector $C_{NL}$.

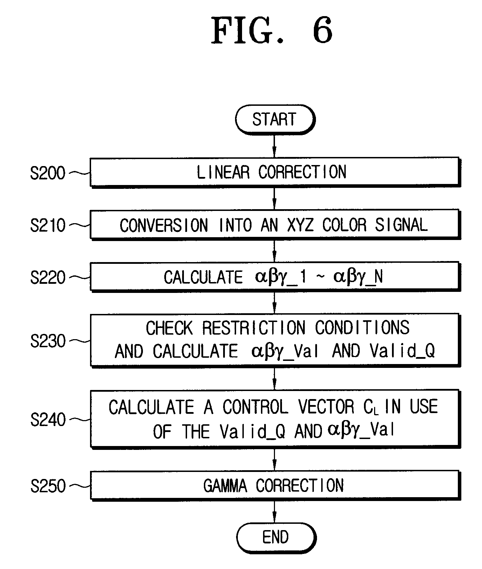

The operation of the color signal conversion apparatus of Figure 5 will now be described with reference to Figure 6.

Firstly, the linear correction unit 100 corrects an input standard non-linear RGB color signal $RGB_{NL}$ into a linear RGB color signal $RGB_L$ (step S200). The linear RGB color signal $RGB_L$ is transferred to the XYZ color signal conversion unit 110 and converted into an XYZ color signal XYZ of the CIE-XYZ color space (step S210).

The XYZ color signal is transferred to the parallel processing unit 120 where the intermediate values $\alpha\beta\gamma\_1$ to $\alpha\beta\gamma\_N$ are calculated simultaneously by the N matrix processors $Q_1$ to $Q_N$ (step S220).

The intermediate values $\alpha\beta\gamma\_1$ to $\alpha\beta\gamma\_N$ are calculated using the following method. A Forward Model for an MPD with p channels can be generally defined by the linear control vector $C_L$ and a p x T matrix as follows:

$$\begin{pmatrix} X \\ Y \\ Z \end{pmatrix} = \begin{pmatrix} X_1 & X_2 & ... & X_P \\ Y_1 & Y_2 & ... & Y_P \\ Z_1 & Z_2 & ... & Z_P \end{pmatrix} \begin{pmatrix} C_{L1} \\ C_{L2} \\ ... \\ C_{L3} \end{pmatrix} \qquad \text{[Equation 1]}$$

where p denotes the number of primary colors in the MPD, that is, the number of channels indicating linear control vectors $C_{Li}$.

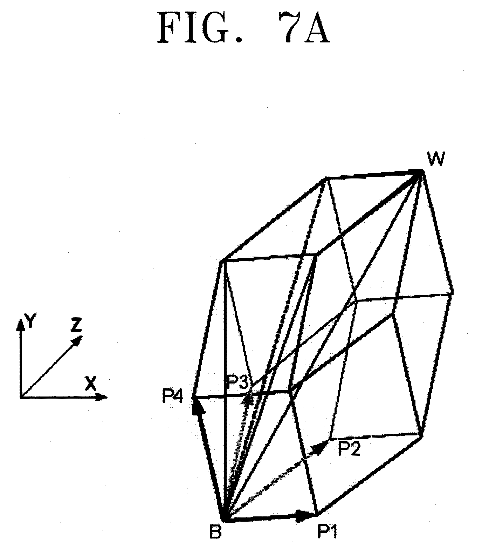

A 3D XYZ color gamut for the MPD is obtained from the Forward Model by combining the linear control vectors $C_{Li}$, as shown in Figure 7A, which shows an example where p = 4.

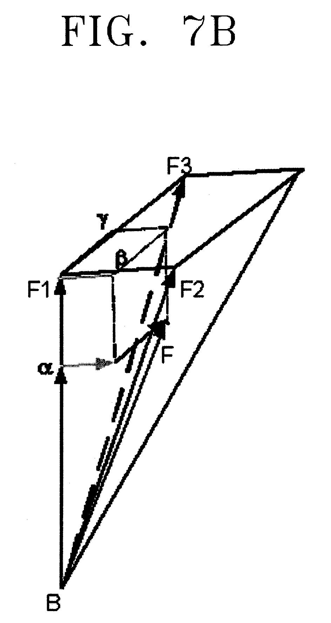

Where the control vector $C_L$ corresponding to a given XYZ color signal is determined using Equation 1, the p x T matrix does not have an inverse matrix since it is not a square matrix. Therefore, a plurality of control vectors may correspond with a given XYZ color signal. While it may be possible to obtain a virtual inverse matrix using regression analysis or other methods, the values obtained by doing so may exceed the physical restriction range, so that the solution obtained in the entire XYZ color gamut would not satisfy all the restriction conditions. Therefore, in order to obtain a unique control vector for a given XYZ color signal, as shown in Figure 7B, the 3D XYZ color gamut for a MPD is divided into pyramids. Each pyramid has a plane as its base and a black point as its vertex. A unique control vector is then calculated using a vector process for each pyramid.

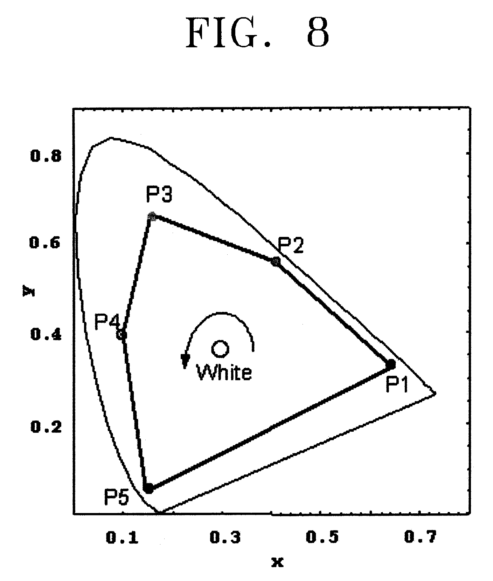

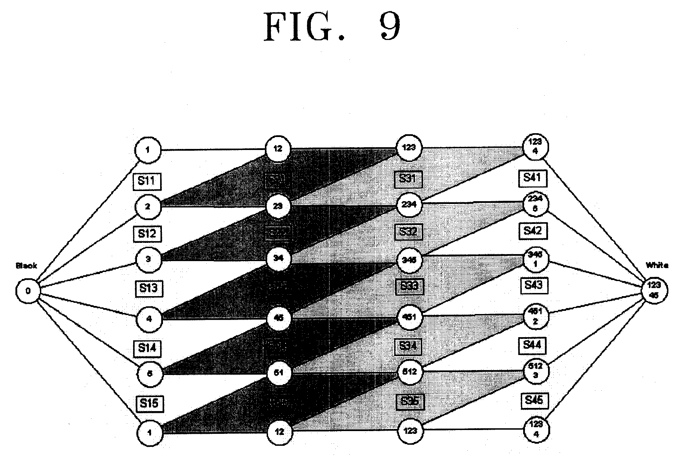

However, two problems remain. These are the determination of the number pyramids that exist in the 3D XYZ color gamut for the MPD and the calculation of the control vector corresponding to each vertex. These problems may be solved using a graphical theorem, as will now be described with reference to Figures 8 and 9.

For an example where the MPD has five channels P1, P2,... P5, the five channels P1 to P5 are arranged in the clockwise or counterclockwise direction about a white point, as shown in Figure 8, and as first-level nodes labelled 1, 2, 3, 4, 5 and 1 in Figure 9. Here, the labels of the nodes indicate channels that each have a maximum control value of "1." In other words, the node labelled "1" indicates the control vector $C_L$ = (1, 0, 0, 0, 0) and a node labelled "123" indicates the control vector $C_L$ = (1, 1, 1, 0, 0).

The labels of nodes in the subsequent levels are derived by combining the labels of first-level nodes with the labels of neighboring nodes in the immediately preceding level. For example, in the second level, the label "12" is formed through a combination of "1" and "2," and the label "23" is formed through a combination of "2" and "3." In this manner, the nodes are combined and labelled up to "12345", which is the case where all five channels have the maximum control value "1", corresponding to the color white.

The nodes represent the vertices of planes in the 3D XYZ color gamut for the MPD. That is, a plane may be formed that passes through four neighboring vertices. Accordingly, if n primary colors are used, there exist a total of [n(n-2)+2] plane vertices and n(n-2) planes S11 to S45. If the entire 3D XYZ color gamut for the MPD is divided into pyramids and the black point is taken as a vertex for all the pyramids, planes S11 to S14 cannot provide base planes for such pyramids since they include the black point. Therefore, excluding the planes S11 to S14, the number of the pyramids is equal to n(n-2).

The XYZ color signal values corresponding to the vertices are the control vectors of the nodes, and can be calculated using Equation 1.

If a given control vector F = (X, Y, Z) lies within an area of a certain pyramid as shown in Figure 7B, the control vector can be expressed as follows:

$$\left. \begin{array}{c} F = \alpha \cdot F1 + \beta \cdot (F2 - F1) + \gamma \cdot (F3 - F1) \\ F = (X, Y, Z) \\ F_i = (X_i, Y_i, Z_i) \end{array} \right\} \qquad \text{[Equation 2]}$$

Here, F2-F1 and F3-F1 each have only one value of F1 ~ F5, that is, one of the basic primary color vectors of the MPD, depending the corresponding pyramid, as shown in Figure 9. In addition, Equation 2 is based on three specific vertices except for the vertex F4 out of the four vertices of the base plane, but the same result can be obtained when two arbitrary vertices including the vertex F4 are used.

When the three linear equations in Equation 2 are developed with respect to $\alpha$, $\beta$, and $\gamma$, the following equations are obtained.

$$\alpha = \frac{X31\,Y21\,Z - X21\,Y31\,Z - X31\,YZ21 + XY31\,Z21 + X21\,YZ31 - XY21\,Z31}{- X31\,Y21\,Z1 + X21\,Y31\,Z1 + X31\,Y1\,Z21 - X1\,Y31\,Z21 - X21\,Y1\,Z31 + X1\,Y21\,Z31}$$

$$\beta = \frac{- X31\,Y1\,Z + X1\,Y31\,Z + X31\,YZ1 - XY31\,Z1 - X1\,YZ31 + XY1\,Z31}{- X31\,Y21\,Z1 + X21\,Y31\,Z1 + X31\,Y1\,Z21 - Z1\,Y31\,Z21 - X21\,Y1\,Z31 + X1\,Y21\,Z31}$$

$$\gamma = \frac{- X21\,Y1\,Z + X1\,Y21\,Z + X21\,YZ1 - XY21\,Z1 - X1\,YZ21 + XY1\,Z21}{X31\,Y21\,Z1 - X21\,Y31\,Z1 - X31\,Y1\,Z21 + X1\,Y31\,Z21 + X21\,Y1\,Z31 - X1\,Y21\,Z31} \qquad \text{[Equation 3]}$$

In order to obtain an actual control vector $C_L$ = ($CL_1$, $CL_2$, ... $CL_p$) from the $\alpha$, $\beta$, and $\gamma$ values calculated in

Equation 3, vector values corresponding to the vectors F1 to F3 are required. These vector values can be calculated in advance through the Forward Model of Equation 1.

For example, if F1 is a value at $C_{F1}$ = (1, 0, 0, 0, 0), F2 is a value at $C_{F2}$ = (1, 1, 0, 0, 0), F3 is a value at $C_{F3}$ = (1, 0, 0, 0, 1), and the black point B is a value at $C_{FB}$ = (0, 0, 0, 0, 0), the control vector affecting the scalar quantity of the vector F1 is determined by the $C_{FB}$ and $C_{F1}$, so that $\alpha$ becomes the scalar quantity of $C_{L1}$, $\beta$ becomes the scalar quantity of $C_{L2}$, $\gamma$ becomes the scalar quantity of $C_{L5}$. The other components are zero. Accordingly, a control vector value for a given XYZ color signal vector becomes equal to $C_L$ = ($\alpha$, $\beta$, 0, 0, $\gamma$).

Various channel values can be expressed using the value $\alpha$, depending upon the corresponding node F1. For example, a pyramid connecting the plane S42 with the plane S42 in Figure 9 is expressed as $C_L$ = ($\gamma$, $\beta$, $\alpha$, $\alpha$, $\alpha$). Through such a process, the parallel matrix processing unit 120 obtains a number of ($\alpha$, $\beta$, $\gamma$) values equal to N = p(p-2), that is, $\alpha\beta\gamma\_1$ to $\alpha\beta\gamma\_N$.

The restriction condition checking unit 130 checks restriction conditions for $\alpha\beta\gamma\_1$ to $\alpha\beta\gamma\_N$ and determines Valid_Q and $\alpha\beta\gamma\_val$ (step S230). At this time, the first restriction condition is a physical range that the ($\alpha$,$\beta$,$\gamma$) must fall within, which can as follows:

$$0 \leq \alpha \leq 1, 0 \leq \beta \leq 1, 0 \leq \gamma \leq 1 \qquad \text{[Equation 4]}$$

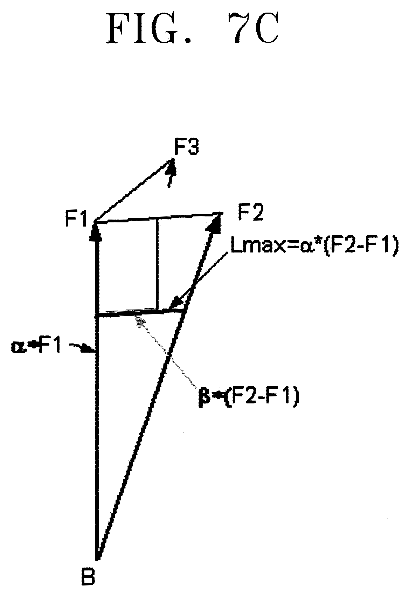

However, since there may be more than one control vector that satisfies the conditions of Equation 4, an additional condition is required in order to determine a control vector value that lies within a given pyramid. The condition that each component vector ($\alpha$F1, (F2-F1), (F3-F1)) based on the calculated ($\alpha$, $\beta$, $\gamma$) is within a particular pyramid should meet the condition of a given proportional expression is shown in Figure 7C. The following condition can be obtained from an example condition of $\beta * (F2 - F1) \leq L$ max.

$$\beta \leq \alpha \text{ and } \gamma \leq \alpha \qquad \text{[Equation 5]}$$

In general, there exists only one solution to ($\alpha$, $\beta$, $\gamma$) that satisfies all the conditions of Equation 4 and Equation 5. There are, at most, four solutions if an input control vector XYZ is positioned on boundary planes of a pyramid. However, in this case, the values of all the ($\alpha$, $\beta$, $\gamma$) are the same and so any of the values may be selected.

Valid_Q, that is, the pyramid index information calculated by the restriction condition checking unit 130, is transferred to the pattern arrangement unit 140, and the $\alpha\beta\gamma\_Val$ is transferred to the control vector arrangement unit 150. The pattern arrangement unit 140 has channel information as to which channel of respective control vectors the Valid_Q signal belongs, and provides the channel information to the control vector arrangement unit 150. The control vector arrangement unit 150 assigns $\alpha\beta\gamma\_Val$ to a corresponding channel and calculates the control vector $C_L$ (step S240).

The gamma correction unit 160 receives the linear control vector $C_L$ and performs gamma correction, taking into account the electro-optical characteristics of the respective actual channels of the MPD. The gamma correction unit 160 outputs the non-linear control vector $C_{NL}$ (step S250).

Through the above process, a control vector for an MPD corresponding to an input XYZ color signal can be calculated. A input color signal can be displayed by the MPD using the calculated non-linear control vector $C_{NL}$.

As described above, the color signal conversion apparatus of Figure 5 calculates a control vector for driving an MPD according to an input standard color signal. In this manner, the input standard color signal can be reproduced on the MPD using four or more primary colors. Furthermore, unlike conventional color signal processing apparatus, the color signal processing apparatus of Figure 5 does not require an LUT memory, and the likelihood of errors at boundary planes is reduced.

**Claims**

1. A method of driving a multi-primary display, comprising:

   calculating a control vector, based on an input three-primary color signal, for controlling four or more primary color light sources the multi-primary display,

   **characterised in that**
   said calculation corresponds to dividing a color space into a plurality of pyramids, each pyramid having black as one vertex, calculating candidate control values for a plurality of said pyramids, selecting a set of control values according to predetermined criteria and deriving the control vector from the selected control values.

2. A method according to claim 1, further comprising converting the input color signal to a color signal based on a second standard (S210), wherein said second standard is device-independent.

3. A color signal processing apparatus for calculating a control vector for driving a multi-primary display comprising:

   calculating means (120, 130, 140, 150) configured to calculate the control vector based on a three-primary colour input color signal, for controlling four or more primary color light sources of the multi-primary display;

   **characterised in that**:

   said calculation means are configured to divide a color space into a plurality of pyramids, each pyramid having black as one vertex and comprises:

   control value calculating means ($Q_1$-$Q_N$) configured to calculate candidate control values for a plurality of said pyramids;
   selection means (130, 140) arranged to select a set of control values according to predetermined criteria; and
   control vector calculating means (150) configured to derive the control vector from the selected control values.

4. A color signal processing apparatus according to claim 3, wherein said determining means (110) are configured to convert the input color signal into a color signal based on a device-independent standard.

5. A display apparatus comprising:

   a multi-primary display; and
   a color signal processing apparatus according to claim 3 or 4.

6. A color signal processing apparatus for calculating a control vector that is a driving signal of a multi-primary display (MPD) corresponding to an input color signal in order to reproduce the input color signal on the MPD using at least four primary colors, comprising:

   an XYZ color signal conversion unit for converting the input color signal into an XYZ color signal of a CIE-XYZ color space for an output;
   a parallel processing unit for obtaining a polyhedron corresponding to a color gamut of the MPD in the CIE-XYZ color space based on an MPD Forward Model, dividing the polyhedron into plural pyramids, and outputting intermediate values for calculating the control vector based on the plural pyramids;
   a restriction condition checking unit for outputting a valid value satisfying a physical restriction condition out of the calculated intermediate values, and outputting an index for a pyramid for which the valid value is calculated;
   a pattern arrangement unit for outputting channel information on the control vector corresponding to the index; and
   a control vector arrangement unit for calculating the control vector based on the channel information and the valid value.

7. The color signal processing apparatus as claimed in claim 6, wherein the Forward Model is expressed as follows:

$$\begin{pmatrix} X \\ Y \\ Z \end{pmatrix} = \begin{pmatrix} X_1 & X_2 & \dots & X_P \\ Y_1 & Y_2 & \dots & Y_P \\ Z_1 & Z_2 & \dots & Z_P \end{pmatrix} \begin{pmatrix} C_{L1} \\ C_{L2} \\ \dots \\ C_{L3} \end{pmatrix}$$

where, (X,Y,Z) denotes the XYZ color signal, p denotes the number of primary colors in the MPD, and $C_{Li}$ denotes a linear control vector.

8. The color signal processing apparatus as claimed in claim 7, wherein the pyramid has each plane of the polyhedron as a base plane and a black point as a vertex of the pyramid.

9. The color signal processing apparatus as claimed in claim 8, wherein the intermediate values are values of ($\alpha$, $\beta$, $\gamma$) capable of representing the XYZ color signal with reference to a vector representing a vertex of the pyramid.

10. The color signal processing apparatus as claimed in claim 9, wherein the parallel processing unit has a number of processors corresponding to the number of pyramids, and each processor simultaneously calculates the values of ($\alpha$, $\beta$, $\gamma$) in parallel with reference to a corresponding pyramid.

11. The color signal processing apparatus as claimed in claim 10, wherein the restriction condition checking unit selects as the valid value a value satisfying conditions of $0 \leq \alpha \leq 1$, $0 \leq \beta \leq 1$, $0 \leq \gamma \leq 1$, $\beta \leq \alpha$ and $\gamma \leq \alpha$, out of the intermediate values.

12. The color signal processing apparatus as claimed in claim 6, further comprising a linear correction unit for linearly correcting a non-linear standard RGB color signal into a standard RGB color signal and providing the corrected standard RGB color signal as the input color signal.

13. The color signal processing apparatus as claimed in claim 6, further comprising a gamma correction unit for gamma-correcting and outputting the control vector.

14. A color signal processing method for calculating a control vector that is a driving signal of a multi-primary display (MPD) corresponding to an input color signal in order to reproduce the input color signal on the MPD using at least four primary colors, comprising steps of:

converting the input color signal into an XYZ color signal of a CIE-XYZ color space for an output;
obtaining a polyhedron corresponding to a color gamut of the MPD in the CIE-XYZ color space based on an MPD Forward Model, dividing the polyhedron into plural pyramids, and outputting intermediate values for calculating the control vector based on the plural pyramids;
outputting a valid value satisfying a physical restriction condition out of the calculated intermediate values, and outputting an index for a pyramid for which the valid value is calculated;
outputting channel information on the control vector corresponding to the index; and
calculating the control vector based on the channel information and the valid value.

15. The color signal processing method as claimed in claim 14, wherein the Forward Model is expressed as follows:

$$\begin{pmatrix} X \\ Y \\ Z \end{pmatrix} = \begin{pmatrix} X_1 & X_2 & \dots & X_P \\ Y_1 & Y_2 & \dots & Y_P \\ Z_1 & Z_2 & \dots & Z_P \end{pmatrix} \begin{pmatrix} C_{L1} \\ C_{L2} \\ \dots \\ C_{L3} \end{pmatrix}$$

where, (X,Y,Z) denotes the XYZ color signal, p denotes the number of primary colors in the MPD, and $C_{Li}$ denotes a linear control vector.

16. The color signal processing method as claimed in claim 15, wherein the pyramid has each plane of the polyhedron as a base plane and a black point as a vertex of the pyramid.

17. The color signal processing method as claimed in claim 16, wherein the intermediate values are values of ($\alpha$, $\beta$, $\gamma$) capable of representing the XYZ color signal with reference to a vector representing a vertex of the pyramid.

18. The color signal processing method as claimed in claim 17, wherein the step of calculating the intermediate values simultaneously calculates the values of ($\alpha$, $\beta$, $\gamma$) in parallel.

19. The color signal processing method as claimed in claim 18, wherein the step of outputting the index selects as the valid value a value satisfying conditions of $0 \le \alpha \le 1$, $0 \le \beta \le 1$, $0 \le \gamma \le 1$, $\beta \le \alpha$ and $\gamma \le \alpha$, out of the intermediate values.

20. The color signal processing method as claimed in claim 14, further comprising a step of linearly correcting a non-linear standard RGB color signal into a standard RGB color signal and providing the corrected standard RGB color signal as the input color signal.

21. The color signal processing method as claimed in claim 14, further comprising a step of gamma-correcting and outputting the control vector.

# FIG. 1

INPUT COLOR SIGNAL → COLOR SIGNAL CONVERSION UNIT (10) → xy → 2D-LUT MEMORY (20) → MATRIX COEFFICIENT SELECTION UNIT (30) → MATRIX COEFFICIENT → MATRIX PROCESSING UNIT (40) → $\overrightarrow{C_L}$

COLOR SIGNAL CONVERSION UNIT → XYZ → MATRIX PROCESSING UNIT

# FIG. 2

# FIG. 3

# FIG. 4

# FIG. 5

EP 1 484 742 A2

# FIG. 6

```
                    ( START )
                        │
                        ▼
S200 ~  ┌──────────────────────────────────┐
        │        LINEAR CORRECTION          │
        └──────────────────────────────────┘
                        │
                        ▼
S210 ~  ┌──────────────────────────────────┐
        │   CONVERSION INTO AN XYZ COLOR SIGNAL │
        └──────────────────────────────────┘
                        │
                        ▼
S220 ~  ┌──────────────────────────────────┐
        │    CALCULATE  αβγ_1 ~ αβγ_N       │
        └──────────────────────────────────┘
                        │
                        ▼
S230 ~  ┌──────────────────────────────────┐
        │    CHECK RESTRICTION CONDITIONS   │
        │ AND CALCULATE  αβγ_Val AND Valid_Q│
        └──────────────────────────────────┘
                        │
                        ▼
S240 ~  ┌──────────────────────────────────┐
        │ CALCULATE A CONTROL VECTOR C_L IN USE │
        │    OF THE Valid_Q AND αβγ_Val     │
        └──────────────────────────────────┘
                        │
                        ▼
S250 ~  ┌──────────────────────────────────┐
        │        GAMMA CORRECTION           │
        └──────────────────────────────────┘
                        │
                        ▼
                    (  END  )
```

# FIG. 7A

# FIG. 7B

# FIG. 7C

# FIG. 8

# FIG. 9